# EUROPEAN PATENT SPECIFICATION

(11) **EP 0 753 380 B1**
(45) Date of publication and mention of the grant of the patent: **09.02.2000**
(21) Application number: 96401502.8
(22) Date of filing: 08.07.1996
(51) Int. Cl.: B24B 31/00, B08B 9/08

(54) **Method of treating inner surface of high-pressure gas vessel**
Verfahren zur Behandlung der inneren Oberfläche eines Hochdruckgefässes
Procédé pour traiter la surface interne d'un récipient de haute pression

(30) Priority: 12.07.1995 JP 17566795
(43) Date of publication of application: 15.01.1997
(73) Proprietor: AIR LIQUIDE Japan, Ltd., Minato-ku Tokyo 105-8437 (JP)
(72) Inventor: Nozawa, Shigeyoshi, c/o Teisan K.K., Osaka-shi, Osaka (JP)
(74) Representative: Vesin, Jacques

(56) References cited:
- DE-B- 1 184 585
- DE-C- 3 815 111
- DE-C- 3 935 535
- FR-A- 1 603 506

## Description

### BACKGROUND OF THE INVENTION

### 1 FIELD OF THE INVENTION

The present invention relates to a method of treating an inner surface of a high-pressure gas vessel, including the steps of charging abrasive containing rust preventive into the high-pressure gas vessel made preferably of manganese steel or chrome-molybdenum steel and of wet-grinding an inner surface of the vessel.

### 2 DESCRIPTION OF THE RELATED ART

As such method of treating an inner surface of a high-pressure gas vessel made of manganese steel, chrome-molybdenum steel or the like, there is known a method of dry-grinding the surface. However, with the drying-grinding treatment alone, the maximum inner surface roughness : Rmax, of the vessel remains as large as 6 µm or more. Then, when gas is taken out of the vessel under high pressure, cluster (or solid particles) of the material forming the high-pressure vessel may be stripped off the inner wall surface of the vessel and this stipped-off material may mix into the gas as dust. If this gas is used in a CVD device for instance, the contamination of the gas with the dust of metal cluster of manganese steel, chromemolybdenum or the like will result in an electrical insulation or conduction failure in the final product manufactured by the CVD device. Hence, there has been the demand for an improved treating method capable of achieving greater fineness (smoothness) on the inner surface so as to restrict generation of dust from the inner surface of the high-pressure gas vessel.

In a conventional method, it has been suggested to use a wet-grinding step for treating the vessel interior to achieve a maximum inner surface roughness of 3 µm or less. In this case, the dust generation due to the stripping-off of the cluster of the material forming the high-pressure gas vessel may be restricted indeed. Yet, with the reduction of the maximum inner-surface roughness Rmax, the surface becomes more vulnerable to oxidation, so that cluster of oxidation product or rust of the vessel forming material is likely to be generated as dust. For this reason, it has also been suggested to use abrasive containing rust preventive in combination with the wet-grinding method. In this case, it was believed that by a water-rinsing operation for removing the dust such as the grinding scraps, fine rust-proof film alone would remain on the inner surface of the gas vessel so as to prevent mixing of dust into the gas to be taken out from the vessel.

It is known for example from FR-A-1603506 a method of treating the surface of a workpiece with an abrasive containing rust-preventing and grinding the surface of said workpiece with said abrasive.

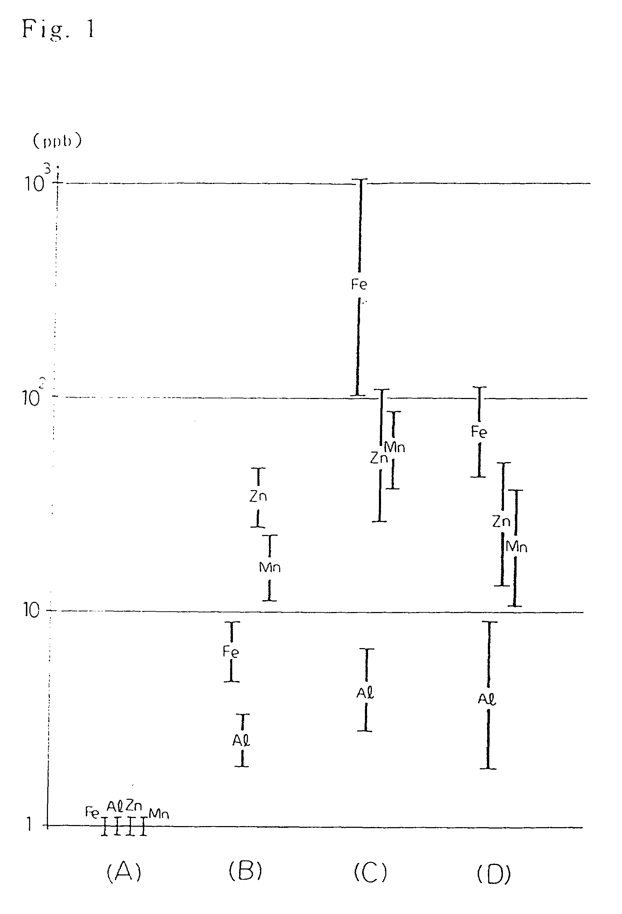

As a matter of fact, it has been found out that the above-described treatment method including the step of wet-grinding the interior of the gas vessel with abrasive including rust preventive and the subsequent steop of water-rinsing the vessel interior cannot completely prevent mixing of dust into the gas (see Fig. 1(B)).

Taking the above-described state of the art into consideration, an object of the present invention is to provide a further improved method of treating an inner surface of a high-pressure vessel made of manganese steel, chrome-molybdenum steel or the like, which method is capable of substantially completele prevention of mixing of dust into gas to be taken out of the vessel.

### SUMMARY OF THE INVENTION

According to the invention, the method is characterized in that said a wet-grinding step is performed so as to obtain in the vessel interior a maximum inner-surface roughness (Rmax) of 3 µm or less, and in that it comprises a step of rinsing the vessel interior, said step of rinsing the vessel interior including an acid rinsing step using an acidic rinsing solution.

Preferably, the acidic rinsing (pickling) solution contains, as the acidic component thereof, at least one selected from the group consisting of diammonium citrate, sodium dihydrogen phosphate and sodium hydrogen diphosphate.

Functions and effects of the features will be described next.

According to findings made through experiments conducted by the present inventors, as illustrated in Fig. 1, in the case of a high-pressure gas vessel made of manganese steel which was not treated by the wet-grinding method using abrasive containing rust preventive, a variety of metal components were found to be present in the order of 100 ppb (weight) in total in pure water used in a rinsing operation of this vessel (see Fig. 1(D)). Further, in the case of another high-pressure gas vessel made also of manganese steel but which was treated by the wet-grinding method, though decreased in quantity to some extent, pure water used in the rinsing opersation of this vessel still contained a variety of metal components in the order of a few to several tens of ppb in total (see Fig. 1 (B)).

The above-described experiment results led the present inventors to an assumption that the dust such as grinding scraps is adsorbed (or fixed) in some manner to a rust-proof film formed during the wet-grinding process and this fixedly adsorbed dust can hardly be removed by the simple water-rinsing operation, so that the un-removed dust may mix into the gas when it is taken out of the vessel under pressure. Then, the inventors reasoned that the adsorbed dust could be removed or desorbed from the dust-proof film by a rinsing operation using an acidic rinsing solution. To confirm the validity of this assumption, the inventors proceeded to conduct a further experiment in which various kinds of acidic rinsing solutions were used to rinse the inner surface of the manganese steel high-pressure gas vessel which had been subjected to the wet-grinding operation with abrasive containing rust preventive. This experiment revealed that this rinsing method can effectively prevent mixing of dust into the gas (see Fig. 1(A)).

Incidentally, substantially the same result as above was obtained in the case of a still further similar experiment made on a high-pressure gas vessel made of chrome-molybdenum steel.

Moreover, if the acid rinsing liquid contains, as the acidic component thereof, at least one selected from the group consisting of diammonium citrate, sodium dihydrogen phosphate and sodium hydrogen diphosphate, the solution gives little disadvantageous effect on the rust-proof film of the gas vessel inner surface. The above selection provides further advantages of allowing mild rinsing work environment and of facilitating a neutralizing operation to be carried out when this acidic rinsing solution is disposed of. Among the above, diammonium citrate is particularly preferred. Namely, diammonium citrate lacks any metal, phosphorous and sulfur components. Then, in case the high-pressure gas vessel is used in the semi-conductor industry, if any portion of the acidic rinsing solution should remain on the inner surface of the vessel, the remaining solution, because of the lack cf above-described components, hardly affects the performance of the semiconductor device product.

As described above, with the simple addition of rising step of the inner surface with acidic rinsing solution after the wet-grinding step of rendering the inner surface to the maximum inner-surface roughness Rmax to a predetermined value, there has been achieved an high-pressure gas vessel which can effectively resist scraping-off of the metal cluster from the inner surface or corrosion of the surface so as to restrict mixing of dust into the gas to be taken out of the vessel.

Incidentally, the inner-surface treatment may be effected again after e.g. a periodic inspection of the vessel by charging water into the vessel and then discharging the water therefrom, and then new gas will be charged therein. In such case too, according to the above-described method of the present invention, dust of metal cluster or the like or any other foreign gaseous component will hardly mix into the newly charged gas, so that high quality and purity of this new gas can be maintained. Therefore, if this gas is used for a CVD device or the like, there will hardly occur electrical insulation or conduction failure in the product manufactured by the device. Consequently, it is possible to constantly provide products of invariably high performance.

Further and other objects, features and effects of the invention will become more apparent from the following more detailed description of the embodiments of the invention with reference to the accompanying drawings.

### DESCRIPTION OF THE PREFERRED EMBODIMENTS

Fig. 1 is a graph showing results of an experiment conducted in a comparison experiment example <1>,
Fig. 2 is a graph showing results of an experiment conducted in a comparison experiment example <2>,
Fig. 3 is a graph showing results of an experiment conducted in a comparison experiment example <3>,
Fig. 4 is a graph showing results of analysis of an inner surface of a cylinder relating to the comparison experiment example <3>,
Fig. 5 is a graph showing results of an experiment conducted in a comparison experiment example <4>,

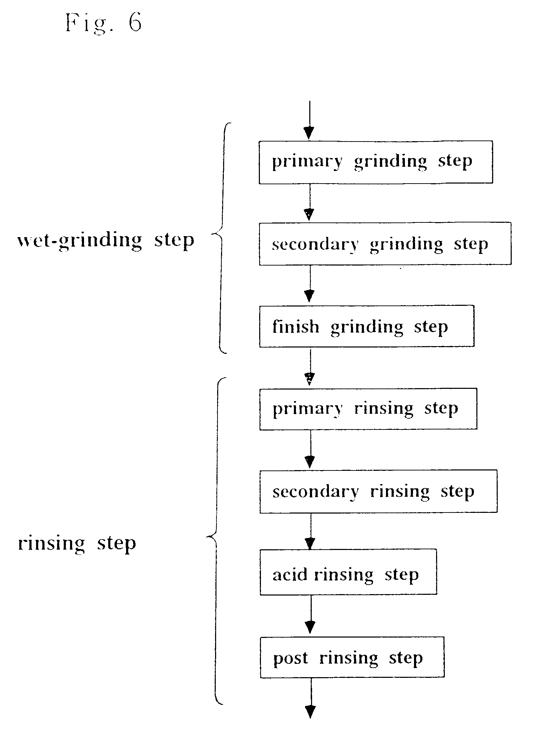

Fig. 6 is a flow chart illustrating the method of treating an inner surface of a high-pressure gas vessel,
Fig. 7 is a conceptual view of a centrifugal grinding machine, and
Fig. 8 is a conceptual view of a rotary grinding machine.

### DETAILED DESCRIPTION OF THE PREFERRED EMBODIMENTS

Embodiments of the present invention will be described in particular with reference to the accompanying drawings.

In this method, first, a wet-grinding step is effected on a high-pressure gas vessel (referred to simply as 'cylinder' hereinafter) made of manganese steel and having a cylindrical configuration so as to render the un-treated, maximum inner-surface roughness (Rmax=12 µm approximately) of the cylinder into a maximum inner surface roughness: Rmax, of 3 µm or less. Thereafter, the cylinder is subjected to a rinsing step and then to some subsequent steps.

The wet-grinding step will be described in details.

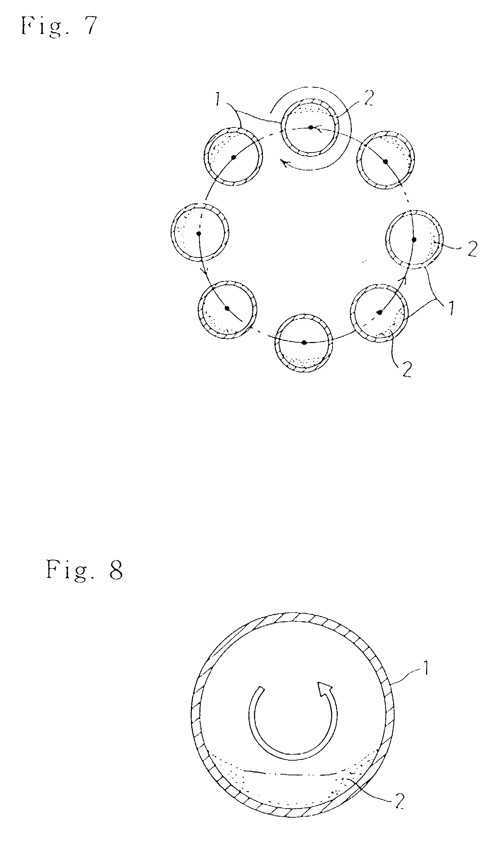

This wet-grinding step is effected by using a wet-grinding machine (so-called centrifugal grinding machine, see Fig. 7). In this machine, a plurality of cylinders 1 each accommodating therein abrasive 2 and rust preventive are supported horizontally, and these cylinders 1 are revolved counterclockwise about a common horizontal axis, while each cylinder 1 being driven to rotate or spin clockwise about its own axis, thereby to effect the wet-grinding operation.

With the above-described wet-grinding machine in operation, the centrifugal force generated in association with the revolution causes the abrasive 2 in each cylinder to be displaced and concentrated outwardly of the locus of the revolution, and the inner surface of the cylinder 1 is rotated relative to this abrasive 2, so that the inner surface of the cylinder 1 is abraded or ground through its contact with the abrasive 2.

The abrasive 2 includes a first type abrasive which comprises ceramic abrasive constituted from sperical ceramic grains of about 5 mm grain size. This first type abrasive is for use in a primary grinding step for obtaining a maximum inner-surface roughness (Rmax) of 3 to 5 µm approximately and for eliminating carbon scale present inside the cylinder. The abrasive 2 further includes a second type abrasive which comprises ceramic abrasive having a higher alumina (Al₂O₃) content than the first type abrasive used in the primary grinding step. This second type abrasive 2 is for use in a secondary grinding step for obtaining a maximum inner-surface roughness (Rmax) of 1 µm approximately and also in a finishing grinding step (repetition of the secondary grinding step) for obtaining a maximum inner-surface roughness (Rmax) of 0.8 µm for approximately. With these secondary and finishing grinding steps, a fine and dense rust-proof film is formed inside the cylinder 1.

Incidentally, in an experimental operation carried out by the present inventors, the first type abrasive 2 was used in the amount of 5 to 10 g per 1 liter of water in the primary grinding step, and the second type abrasive 2 was used in the amount of 10 to 20 g per 1 liter of water in the secondary grinding step.

Next, the rinsing step will be described in details.

First, silica-alumina and pure water are charged into the cylinder 1 ground and finished in the above-described manner. Under this condition, the cylinder 1 is attached to a rotating device 8 (so-called rotary grinding machine (see Fig. 8 )). Then, the cylinder 1 is rotated on the machine at a low rotation rate to effect a primary rinsing operation for removing abrasive and/or rust preventive remaining inside the cylinder 1.

Thereafter, the cylinder 1 is subjected to a secondary risning operation in which the inner surface of the cylinder is rinsed with pure water to remove any dust adhering to the rust-proof film formed on the inner surface of the cylinder.

Then, the cylinder 1 is further subjected to an acid rinsing step in which an acidic rinsing solution comprising about 0.1 % aqueous solution of diammonium citrate is used for removing any dust which has remained un-removed by the secondary rinsing step described above.

After the acid rinsing step, the cylinder is subjected to an after-rinsing operation using pure water again. This after-rinsing operation is effected for preventing the acidic rinsing solution from remaining on the inner wall surface of the cylinder.

After the above-described grinding operations and rinsing operations, the cylinder is baked and then cooled. Thereafter, the cylinder is subjected to various post-treatment operations such as valve attachment, valve tightening, leak inspection, vacuum heating cleaning, gas purging operation and so on, then, the cylinder is charged with gas to be ready for use as a gas cylinder.

Some comparison experiments were conducted to compare the cylinder treated by the above-described inner-surface treating method of the invention with a variety of reference cylinders. These comparison experiments will be described next.

### <comparison experiment example 1>

This experiment was conducted to find out the degree of difference in the generation amount of metal dust that the pure-water rinsing operation and the acidic solution rising operation can make. Specifically, comparisons were made among: (A) a cylinder treated by the inner-surface treatment method of the present invention; (B) a cylinder treated with the grinding operations, but without the acid rinsing operation; (C) a cylinder treated with the acid rinsing operation alone; and (D) a cylinder treated with neither the grinding operations nor the acid rinsing operations. The results of the experiment are shown in Fig. 1.

As shown in Fig. 1, in the case of the cylinders not treated with the wet-grinding operations, a significant amount of metal dust was generated, and this amount of metal dust could not be reduced by the acid rinsing operation alone. On the other hand, in the case of the cylinders is treated with the wet-grinding operations, with the acid liquid cleaning operation, the amount of generated metal dust could be restricted to substantially 0 (zero) (weight ppb) (blow the detection limit).

### <comparison experiment example 2>

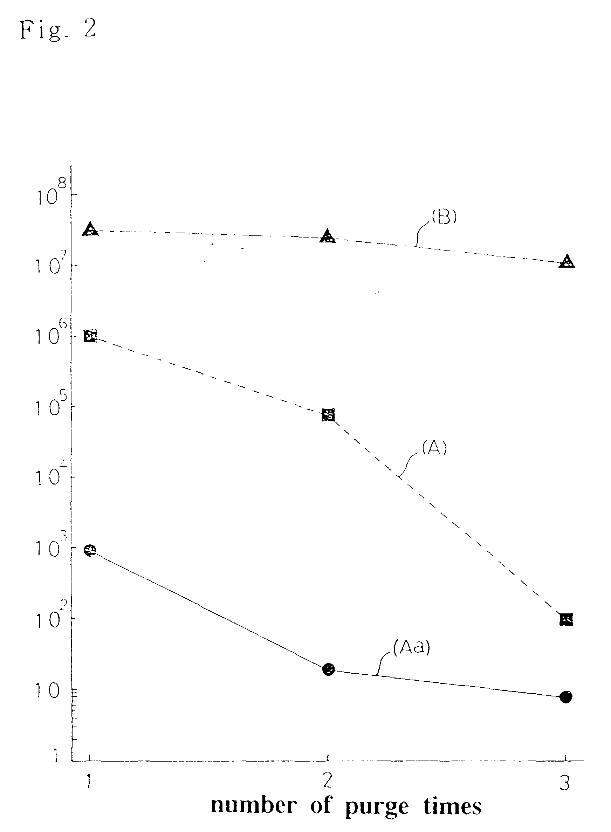

Regarding the amount of dust generated in the cylinder in nitrogen gas purging operations carried out one after another, comparisons were made between (A) a cylinder treated by the inner-surface treating method of the present invention; and (B) a cylinder treated with the grinding operations, but without the acid rinsing operation. The results are shown in Fig. 2. In the figure, there is also shown result obtained of a further reference cylinder (Aa) which was treated by the inner-surface treating method carried out in a clean area.

As shown in Fig. 2, the amount of dust generated in the gas purging operations gradually decreased after each gas purging operation. However, in the case of the cylinder (B) without the acid rinsing operation, in the third gas purging operations, the dust amount was decreased only to 10⁷ units/cft approximately. Whereas, in the case of the cylinder (A) treated by the method of the invention, in the third gas purging operation, the dust amount was decreased from the initial dust amount of about 10⁶ units/cft to 10² units/cft approximately. Further, in the case of the other reference cylinder treated with the method of the invention effected in a clean area, the dust amount was further decreased to 10 units/cft or less.

Based on the above-described observations, the lack of reduction in the dust amount in the case of lack of the acid rinsing operation seems to be attributable to the fact that new dust was generated from the inner wall surface of the cylinder with each another gas purging operation. And, the observations suggest that the acid rinsing operation could restrict such generation of new dust from the inner wall surface of the cylinder.

Incidentally, the 'dust' as used herein refers to solid components dispersed in the nitrogen gas and having particle diameter of 0.1 µm or more.

### <comparison experiment example 3>

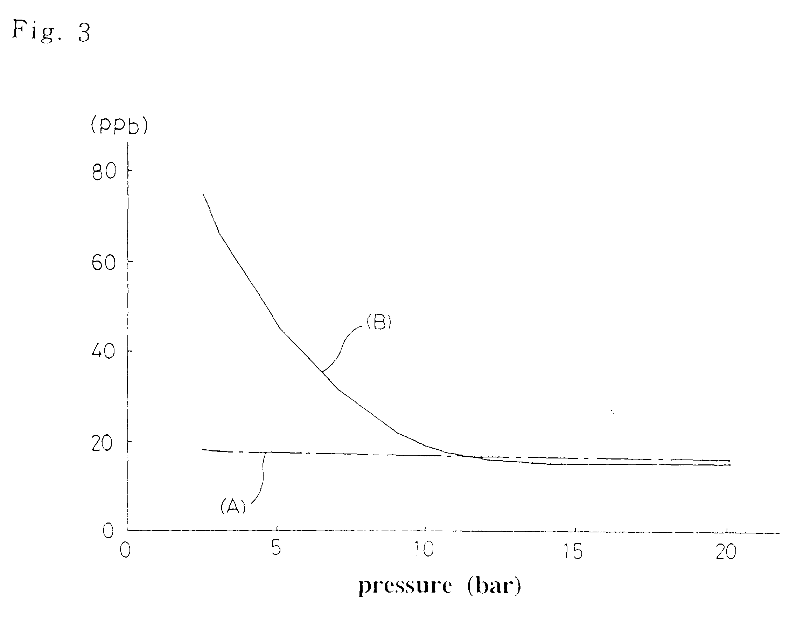

In this experiment, (A) a cylinder treated by the inner-surface treating method of the invention and a cylinder (B) treated with the grinding operations, but without tine acid rinsing operation were compared to each other to find out difference therebetween in moisture adsorbing characteristics thereof. The results are shown in Fig. 3. For the comparison, a test piece was put into each cylinder treated with the inner-surface treatment. Then, the inner pressure of the cylinder was released to observe resultant change in the moisture concentrations inside the cylinder.

As shown in Fig. 3, in the case of the cylinder without the acid rinsing operation, although no moisture content apparently seemed to be adsorbed on the inner surface under the high pressure condition, moisture content appeared and desorbed from the inner surface with the reduction of the inner pressure of the cylinder. So that, this moisture content may mix into the gas. On the other hand, in the case of the cylinder treated with the inner-surface treating method of the invention, it is believed that the inner surface of the cylinder was made highly resistant against moisture adsorption. Accordingly, the results indicated that the cylinder treated by the inner-surface treating method of the invention had obtained fine and dense inner surface highly resistant against moisture adsorption thereto.

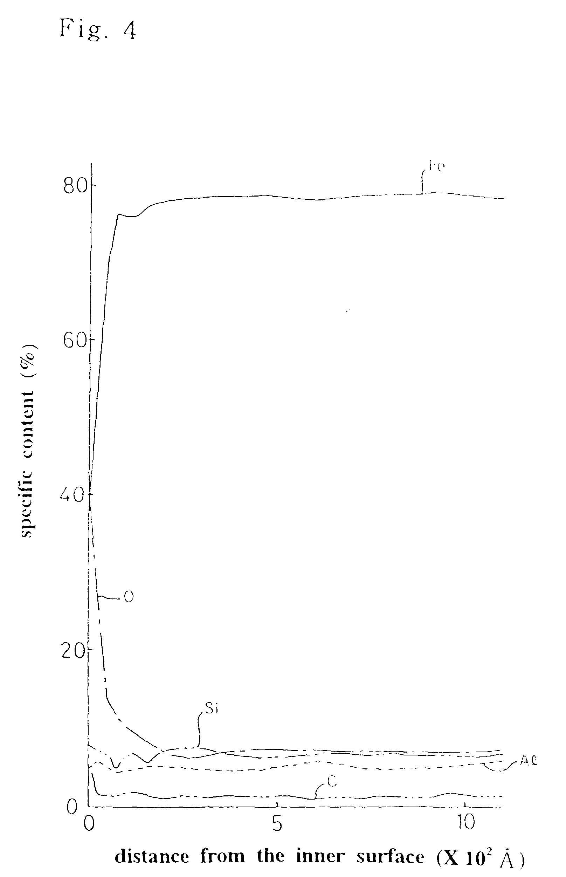

Then, an analysis was made on the inner surface of the cylinder treated by the inner-surface treating method of the invention. The result, of the analysis is shown in Fig. 4. With this analysis as shown, it was confirmed that a fine and dense rust preventive film constituted mainly from iron oxide was formed on the inner surface.

### <comparison experiment example 4>

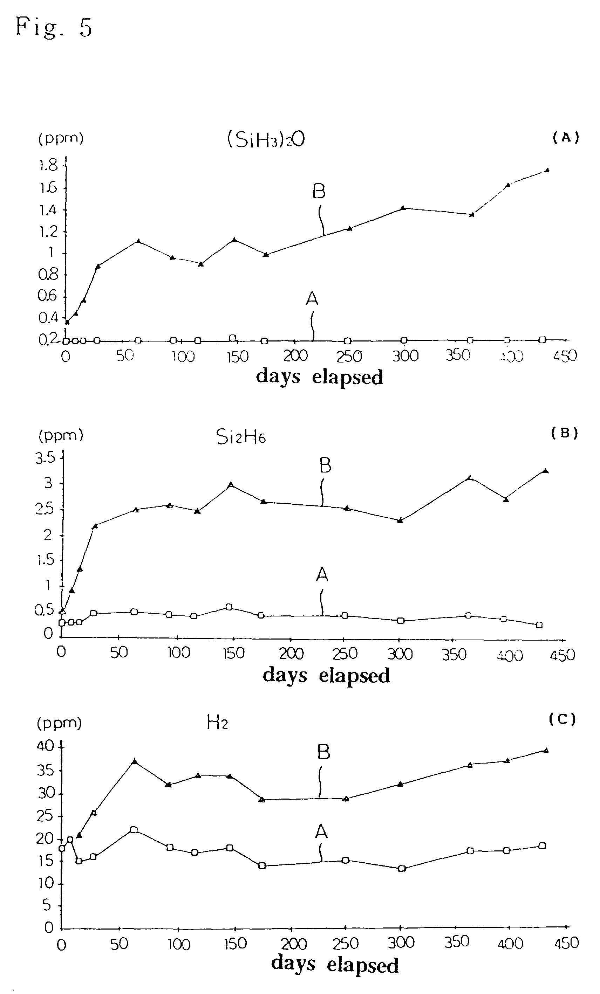

A comparison was made between a cylinder (A) treated with the inner-surface treating method of the present invention and a cylinder (B) treated with the grinding operations, but without the acid rinsing operation in order to find out difference therebetween in the stability of silane gas when the silane gas was charged into each cylinder. The result of the comparison is shown in Fig. 5.

As shown in Fig. 5, in the case of the cylinder (B), an increasing tendency was observed in both di-silane (Si₂H₄) and hydrogen (H₂) due to decomposition of the silane gas. Further, generation of siloxane was also observed. Therefore, it is believed that the silane gas was decomposed by moisture content or oxygen adsorbed on the inner surface of the cylinder. On the other hand, in the case of the cylinder (A), such increase of di-silane (Si₂H₄ ) and hydrogen (H₂ ) due to decomposition of the silane gas was not observed. Also, the generation amount of siloxane was below the detection limit. Therefore, it may be reasoned that the stability of silane gas was maintained high because of the acquired high resistance of the inner surface against moisture or oxygen adsorption thereto.

Some other embodiments of the invention will be specifically described next.
(1) The material forming the high-pressure gas vessel is not particularly limited in the present invention. The vessel may be formed of chrome molybdenum steel or any other kind of steel alloy conventionally used for forming a high-pressure gas vessel, provided that the selected material is usable for forming a high-pressure vessel which can satisfy the maximum inner-surface roughness (Rmax) requirement of 3 µm or less.
(2) As to the acidic component of the acidic rinsing solution, sodium dihydrogen phosphate or sodium hydrogen diphosphate free from phosphorus content may be employed as well. However, diammonium citrate containing neither phosphorous content nor metal content is preferred in particular. The concentration of the acidic rinsing solution may vary within a range of 1% or less which range is is non-detrimental to the rust-preventive film. However, the concentration of about 0.1 % is particularly preferred as being capable of achieving sufficient rinsing effect while restricting the amount of the acidic solution to be used.

Further, those steps subsequent to the acid rinsing step may be effected in any conventional manners.

## Claims

1. A method of treating an inner surface of a high-pressure gas vessel, including the steps of charging abrasive (2) containing rust preventive into the high-pressure gas vessel (1) made preferably of manganese steel or chrome-molybdenum steel; wet-grinding an inner surface of the vessel (1) characterized in that said wet-grinding step is performed so as to obtain in the vessel interior a maximum inner-surface roughness (Rmax) of 3 µm or less and in that it further comprises a step of rinsing the vessel interior, said step of rinsing the vessel interior including an acid rinsing step using an acidic rinsing solution.

2. A method according to claim 1, characterized in that in said wet-grinding step, said high pressure gas vessel (1) is supported horizontally, with the vessel (1) accommodating therein said abrasive (2) containing rust preventive, and said vessel (A) (1) under this is condition is revolved in direction about a horizontal revolution axis while the vessel (1) being driven to rotate and spin about its own axis in a direction opposite to said one direction.

3. A method according to claim 1 or 2,
characterized in that
said wet-grinding step is carried out by using a centrifugal grinding machine.

4. A method according to any one of claims 1 through 3,
characterized in that
said wet-grinding step includes a primary grinding step using ceramic abrasive having about 5 mm grain size as said abrasive (2), a secondary grinding step using further ceramic abrasive having a higher alumina content than said ceramic abrasive used in said primary grinding step, and a finishing grinding step comprising a repetition of said secondary grinding step.

5. A method according to claim 4,
characterized in that
said primary grinding step uses said abrasive (2) in the amount of about 5 to 10 g per 1 liter of water and said secondary grinding step uses said further abrasive (2) in the amount of about 10 to 20 g per 1 liter of water.

6. A method according to any one of claims 1 through 5,
characterized in that
said acidic rinsing solution contains, as the acidic component thereof, at least one selected from the group consisting of diammonium citrate, sodium dihydrogen phosphate and sodium hydrogen diphosphate.

7. A method according to claim 4 or 5,
characterized in that
said rinsing step includes a primary rinsing step in which said high-pressure gas vessel (1) after said finishing grinding step is attached to a rotary grinding machine which drives the vessel (1) (A) to pin about an axis thereof at a low rotation rate with the vessel (1) accommodating therein silica-alumina abrasive and pure water, so as to remove abrasive and/or rust preventive remaining inside the vessel (1), and a secondary rinsing step for rinsing the inner surface of the high-pressure gas vessel (1) with pure water to move dust adhering to a rust-proof film formed on the inner surface.

8. A method according to claim 7,
characterized in that
in said acid rinsing step, about 0.1 (A) % aqueous solution of diammonium citrate is used for removing dust which has remained un-removed by said secondary rinsing step and still adhering to the rust-proof film; and
said rinsing step further includes an after-rinsing step using pure water again for preventing said acidic rinsing solution from remaining on the inner surface of the high-pressure gas vessel (1).

## Patentansprüche

1. Verfahren zur Behandlung einer Innenfläche eines Hochdruckgasbehälters, bei dem man in den Hochdruckgasbehälter (1), der vorzugsweise aus Manganstahl oder Chrom-Molybdän-Stahl gefertigt ist, Rostschutzmittel enthaltendes Schleifmittel (2) einbringt und die Innenfläche des Behälters (1) naßschleift, dadurch gekennzeichnet, daß man das Naßschleifen so durchführt, daß man im Behälterinneren eine maximale Innenflächenrauheit (Rmax) von höchstens 3 µm erhält, und daß man außerdem das Behälterinnere spült, wobei das Spülen einen Säurespülschritt unter Verwendung einer sauren Spüllösung umfaßt.

2. Verfahren nach Anspruch 1, dadurch gekennzeichnet, daß man beim Naßschleifen den Hochdruckgasbehälter (1) horizontal lagert, wobei der Behälter (1) das Rostschutzmittel enthaltende Schleifmittel (2) aufnimmt, und den Behälter (1) in diesem Zustand in einer Richtung um eine horizontale Drehachse dreht, wobei man den Behälter (1) in einer der einen Richtung entgegengesetzten Richtung um seine eigene Achse rotieren läßt.

3. Verfahren nach Anspruch 1 oder 2, dadurch gekennzeichnet, daß man das Naßschleifen mit einer Zentrifugalschleifmaschine durchführt.

4. Verfahren nach einem der Ansprüche 1 bis 3, dadurch gekennzeichnet, daß man beim Naßschleifen einen primären Schleifschritt unter Verwendung von Keramikschleifmittel mit einer Korngröße von etwa 5 mm als Schleifmittel (2), einen sekundären Schleifschritt mit einem weiteren Keramikschleifmittel, das einen höheren Aluminiumoxidgehalt als das im primären Schleifschritt verwendete Keramikschleifmittel aufweist, und einen Endschleifschritt, bei dem es sich um eine Wiederholung des sekundären Schleifschritts handelt, durchführt.

5. Verfahren nach Anspruch 4, dadurch gekennzeichnet, daß man im primären Schleifschritt das Schleifmittel (2) in einer Menge von etwa 5 bis 10 g auf 1 Liter Wasser und im sekundären Schleifschritt das weitere Schleifmittel (2) in einer Menge von etwa 10 bis 20 g auf 1 Liter Wasser verwendet.

6. Verfahren nach einem der Ansprüche 1 bis 5, dadurch gekennzeichnet, daß man eine saure Spüllösung verwendet, die als saure Komponente mindestens eine Verbindung aus der Gruppe bestehend aus Diammoniumcitrat, Natriumdihydrogenphosphat und Natriumhydrogendiphosphat enthält.

7. Verfahren nach Anspruch 4 oder 5, dadurch gekennzeichnet, daß man beim Spülen einen primären Spülschritt, bei dem man den Hochdruckgasbehälter (1) nach dem Endschleifschritt auf einer Rotationsschleifmaschine anbringt, die den Behälter (1) mit einer niedrigen Rotationsrate um eine Behälterachse rotieren läßt, wobei der Behälter (1) Siliciumoxid-Aluminiumoxid-Schleifmittel und reines Wasser aufnimmt, wodurch im Behälter (1) verbleibendes Schleifmittel und/oder Rostschutzmittel entfernt werden, und einen sekundären Spülschritt zum Spülen der Innenfläche des Hochdruckgasbehälters (1) mit reinem Wasser zur Entfernung von an einem auf der Innenfläche gebildeten rostfesten Film anhaftendem Staub durchführt.

8. Verfahren nach Anspruch 7, dadurch gekennzeichnet, daß man beim Säurespülschritt zur Entfernung von Staub, der beim sekundären Spülschritt nicht entfernt worden ist und noch am rostfesten Film anhaftet, etwa 0,1%ige wäßrige Diammoniumcitratlösung verwendet und
der Spülschritt außerdem auch noch einen Nachspülschritt umfaßt, bei dem man wiederum unter Verwendung von reinem Wasser verhindert, daß die saure Spüllösung an der Innenfläche des Hochdruckgasbehälters (1) verbleibt.

## Revendications

1. Procédé de traitement d'une surface interne d'un récipient à gaz à haute pression, comprenant les étapes de chargement d'abrasif (2) contenant de l'antirouille dans le récipient à gaz à haute pression (1) fait de préférence d'acier de manganèse ou d'acier de chrome-molybdène; de broyage humide d'une surface interne du récipient (1), caractérisé en ce que ladite étape de broyage humide est réalisée de manière à obtenir dans l'enceinte du récipient une rugosité maximale de surface interne (Rmax) de 3 µm ou moins, et en ce qu'il comprend en outre une étape de rinçage de l'enceinte du récipient, ladite étape de rinçage de l'enceinte du récipient comprenant une étape de rinçage à l'acide utilisant une solution de rinçage acide.

2. Procédé suivant la revendication 1, caractérisé en ce que dans ladite étape de broyage humide, ledit récipient à gaz à haute pression (1) est étayé horizontalement, le récipient (1) logeant en son sein ledit abrasif (2) contenant de l'antirouille, et ledit récipient (1) dans cette condition est mis en rotation autour d'un axe de révolution horizontal tandis que le récipient (1) est amené à pivoter et à être en rotation autour de son propre axe dans une direction opposée à ladite direction.

3. Procédé suivant la revendication 1 ou 2, caractérisé en ce que ladite étape de broyage humide est réalisée en utilisant une machine de broyage centrifuge.

4. Procédé suivant l'une quelconque des revendications 1 (A) à 3, caractérisé en ce que ladite étape de broyage humide comprend une première étape de broyage utilisant un abrasif en céramique ayant une taille de grain d'environ 5 mm comme ledit abrasif (2), une deuxième étape de broyage utilisant un autre abrasif en céramique ayant un contenu en alumine plus élevé que ledit abrasif en céramique utilisé dans ladite première étape de broyage, et une étape finale de broyage comprenant une répétition de ladite deuxième étape de broyage.

5. Procédé suivant la revendication 4, caractérisé en ce que ladite première étape de broyage utilise ledit abrasif (2) en une quantité d'environ 5 à 10 g pour 1 litre d'eau, et ladite deuxième étape de broyage utilise ledit autre abrasif (2) en une quantité d'environ 10 à 20 g pour 1 litre d'eau.

6. Procédé suivant l'une quelconque des revendications 1 (A) à 5, caractérisé en ce que ladite solution de rinçage à l'acide contient, comme composant acide de celle-ci, au moins un élément sélectionné parmi le groupe constitué de citrate de diammonium, de dihydrogénophosphate de sodium et d'hydrogénodiphosphate de sodium.

7. Procédé suivant la revendication 4 ou 5, caractérisé en ce que ladite étape de rinçage comprend une première étape de rinçage dans laquelle ledit récipient à gaz à haute pression (1), après ladite étape finale de broyage, est attaché à une machine de broyage rotatif qui amène le récipient (1) à suivre un axe de celle-ci à une faible vitesse de rotation, le récipient (1) logeant en son sein l'abrasif de silice-alumine et l'eau pure, de manière à éliminer l'abrasif et/ou l'antirouille restant à l'intérieur du récipient (1), et une deuxième étape de rinçage pour rincer la surface interne du récipient à gaz à haute pression (1) avec de l'eau pure pour enlever la poussière adhérant à un film résistant à la rouille formé sur la surface interne.

8. Procédé suivant la revendication 7, caractérisé en ce que dans ladite étape de rinçage à l'acide, une solution aqueuse à environ 0,1% de citrate de diammonium est utilisée pour éliminer la poussière qui est restée non éliminée par ladite deuxième étape de rinçage et adhérant encore au film résistant à la rouille; et
ladite étape de rinçage comprend en outre une étape d'après-rinçage utilisant à nouveau de l'eau pure pour éviter que ladite solution de rinçage à l'acide reste sur la surface interne du récipient à gaz à haute pression (1).
